# FASCICULE DE BREVET EUROPEEN

(11) **EP 3 877 238 B1**
(45) Date de publication et mention de la délivrance du brevet: **16.08.2023**
(21) Numéro de dépôt: 19801256.9
(22) Date de dépôt: 05.11.2019
(51) Int. Cl.: B62D 21/15, B60K 1/04

(54) **DISPOSITIF DE PROTECTION D'UNE BATTERIE D'ALIMENTATION DE PUISSANCE D'UN VÉHICULE**
VORRICHTUNG ZUM SCHUTZ EINER STROMVERSORGUNGSBATTERIE EINES KRAFTFAHRZEUGS
DEVICE FOR PROTECTING A POWER SUPPLY BATTERY OF A MOTOR VEHICLE

(30) Priorité: 07.11.2018 FR 1860250
(43) Date de publication de la demande: 15.09.2021
(73) Titulaire: Renault s.a.s, 92100 Boulogne Billancourt (FR); NISSAN MOTOR Co., Ltd., Yokohama-shi, Kanagawa 221-0023 (JP)
(72) Inventeur: CHEMALI, Habib, 92700 Colombes (FR); MARIOTTE, Yann, 91070 BONDOUFLE (FR)
(74) Mandataire: Renault Group
(86) Numéro de dépôt international: PCT/EP2019/080279
(87) Numéro de publication internationale: WO 2020/094662

(56) Documents cités:
- EP-A1- 2 766 247
- EP-A1- 2 767 427
- DE-A1-102011 120 960
- DE-A1-102013 006 702
- US-A1- 2018 312 199

## Description

L'invention concerne un dispositif de protection, notamment destiné à protéger une batterie d'alimentation de puissance d'un véhicule automobile à motorisation électrique ou hybride contre les chocs latéraux. L'invention porte aussi sur un véhicule automobile comprenant un tel dispositif de protection. L'invention porte encore sur un procédé de montage d'un tel dispositif de protection dans un véhicule automobile.

Les véhicules à motorisation électrique ou hybride comprennent une batterie d'alimentation de puissance pour alimenter en énergie électrique le moteur électrique, notamment d'entraînement. Une telle batterie est habituellement positionnée dans la partie inférieure de la structure du véhicule. Il en résulte qu'une telle batterie est exposée à des efforts extérieurs appliqués au véhicule, notamment en cas de choc latéral, par exemple avec des objets tels qu'un poteau ou un trottoir. EP2767427A1, l'état de la technique le plus proche, divulgue un dispositif de protection, configuré pour protéger contre des chocs une batterie d'alimentation de puissance d'un véhicule automobile à motorisation électrique ou hybride, comportant, sous la forme d'une seule pièce, un élément de protection et un absorbeur de choc, l'élément de protection se présentant sous la forme d'une feuille, ou plaque, plane ou non plane, notamment convexe du côté de la surface supérieure de l'élément de protection.

Il apparaît important de pouvoir protéger une batterie d'alimentation de puissance d'un véhicule automobile à motorisation électrique ou hybride contre des efforts extérieurs appliqués au véhicule, notamment en cas de choc latéral.

Une solution consiste à utiliser des éléments de protection en plastique, disposés autour de la batterie, et alignés avec la surface inférieure de la batterie selon un axe vertical z. Autrement dit, ces éléments de protection sont disposés à la même hauteur que la surface inférieure de la batterie. Une autre solution consiste à utiliser une extension vers le bas des feuillures de bavolets. Les véhicules automobiles peuvent comporter des bavolets disposés latéralement de chaque côté du véhicule, et correspondant aux parties latérales les plus basses de la carrosserie du véhicule. Toutefois, malgré la présence de bavolets, la surface inférieure de la batterie peut encore se trouver à une distance plus proche du sol que l'extrémité inférieure des bavolets. Une solution pour protéger la batterie contre des chocs latéraux consiste alors à augmenter la dimension des bavolets selon un axe vertical z, de sorte que l'extrémité inférieure des bavolets se trouve à une distance plus proche du sol que la surface inférieure de la batterie.

Toutefois, ces solutions présentent des inconvénients. En particulier, en cas de choc latéral, ces solutions peuvent entraîner une perforation du carter de la batterie ainsi que du module batterie lui-même. Il en résulte un risque de court-circuit et d'incendie.

Le but de l'invention est de fournir un dispositif de protection, notamment destiné à protéger une batterie d'alimentation de puissance d'un véhicule automobile, remédiant aux inconvénients ci-dessus et améliorant les dispositifs de protection de l'art antérieur. En particulier, l'invention permet de réaliser un dispositif de protection qui soit simple à assembler dans un véhicule, qui présente un coût de fabrication et de montage réduit, et qui présente des performances aérodynamiques améliorées.

Selon l'invention, il est prévu un dispositif de protection conformément à la revendication 1.

Avantageusement, la surface inférieure de l'élément de protection, destinée à faire face au sol, peut comporter des rainures.

La portion supérieure de l'absorbeur de choc peut être concave du côté opposé à celui faisant face à la surface supérieure de l'élément de protection.

L'absorbeur de choc peut comprendre un matériau déformable, par exemple choisi dans le groupe comprenant un matériau métallique, notamment un alliage d'aluminium, un matériau plastique et un matériau composite.

L'élément de protection comprend par exemple un matériau choisi dans le groupe comprenant un matériau métallique, notamment un alliage d'aluminium, un matériau plastique et un matériau composite.

L'élément de protection et l'absorbeur de choc peuvent être en un même matériau.

L'élément de protection présente par exemple une épaisseur comprise entre 2 mm et 5 mm.

L'élément de protection peut comporter, selon un axe sensiblement vertical, une portion interne d'un premier niveau, une portion intermédiaire inclinée du premier niveau à un deuxième niveau et une portion externe du deuxième niveau, ladite portion interne étant destinée à faire face au moins en partie à une surface inférieure de la batterie, et ladite portion externe étant destinée à faire face au moins en partie à la caisse d'un véhicule.

L'élément de protection peut comporter au moins un premier point de fixation, par exemple deux premiers points de fixation, destinés à la fixation du dispositif de protection sur une batterie, et au moins un deuxième point de fixation, par exemple quatre deuxièmes points de fixation, destinés à la fixation du dispositif de protection sur une caisse d'un véhicule automobile.

L'invention concerne également un véhicule automobile à motorisation électrique ou hybride, comprenant une batterie d'alimentation de puissance et un dispositif de protection tel que défini précédemment, dans lequel l'élément de protection recouvre au moins en partie la surface inférieure de la batterie, de sorte que le dispositif de protection soit plus proche du sol que la surface inférieure de la batterie.

L'élément de protection peut être fixé, de façon amovible, à un support de la batterie et à la caisse du véhicule.

L'absorbeur de choc du dispositif de protection peut être disposé, selon la direction longitudinale du véhicule, entre un élément de support avant du support batterie et une fixation du train arrière du véhicule, et, selon la direction transversale du véhicule, contre un bord latéral de la batterie.

L'invention concerne enfin un procédé de montage d'un dispositif de protection tel que défini précédemment dans un véhicule automobile à motorisation électrique ou hybride comprenant une batterie d'alimentation de puissance, comprenant les étapes suivantes :
- fournir une batterie et au moins un dispositif de protection ; et
- au moins d'un des deux côtés droit et gauche du véhicule, fixer, de façon amovible, un premier dispositif de protection sur le bord latéral correspondant de la batterie et sur la caisse du véhicule, de sorte que l'élément de protection recouvre au moins en partie la surface inférieure de la batterie, l'absorbeur de choc étant par exemple disposé, selon la direction longitudinale du véhicule, entre un élément de support avant d'un support de la batterie et une fixation du train arrière, et, selon la direction transversale du véhicule, contre le bord latéral de la batterie.

Le dessin annexé représente, à titre d'exemple, un mode de réalisation d'un dispositif de protection selon l'invention et un mode d'exécution d'un procédé de montage selon l'invention.
La figure 1 est une vue de dessous représentant, de façon partielle selon la direction longitudinale, un véhicule automobile comportant une batterie d'alimentation d'un moteur d'entraînement du véhicule.
La figure 2 est une vue en perspective représentant un mode de réalisation d'un dispositif de protection, destiné à être monté du côté droit d'un véhicule.
La figure 3 une vue de dessous représentant un mode de réalisation d'un dispositif de protection, destiné à être monté du côté droit d'un véhicule.
La figure 4 est une vue de dessous partielle représentant un agencement d'une batterie d'alimentation de puissance et d'un mode de réalisation d'un dispositif de protection dans un véhicule automobile.
La figure 5 est une vue partielle en coupe par un plan vertical représentant un agencement d'une batterie d'alimentation de puissance et d'un mode de réalisation d'un dispositif de protection dans un véhicule automobile.

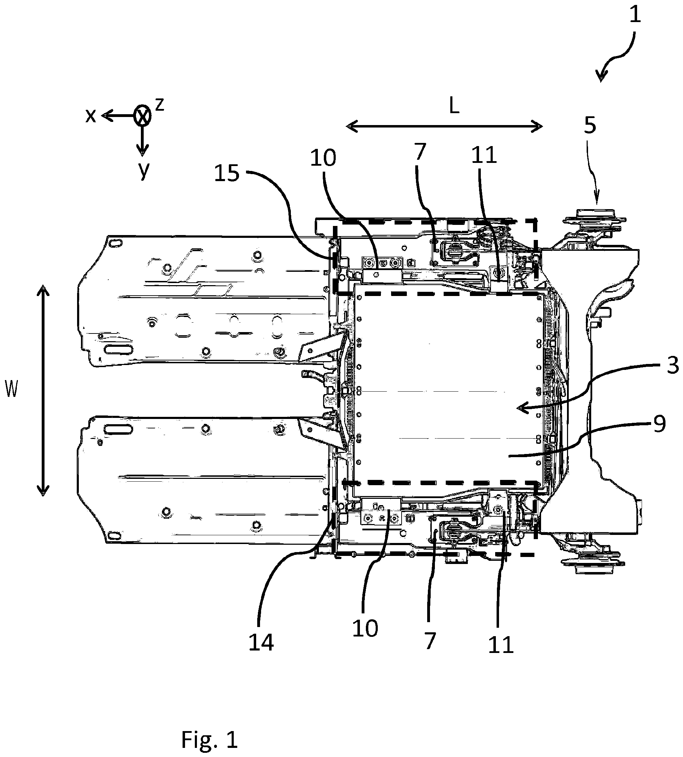

La figure 1 est une vue de dessous représentant de façon partielle un véhicule automobile 1 à motorisation électrique ou hybride.

L'axe x correspond à la direction longitudinale du véhicule 1. L'axe x est orienté de l'arrière (ou amont) vers l'avant (ou aval) du véhicule 1. L'axe x correspond à la direction dans laquelle le véhicule se déplace habituellement en ligne droite. L'axe y correspond à la direction transversale du véhicule 1. L'axe y est orienté du côté gauche vers le côté droit du véhicule 1. L'axe z est un axe sensiblement vertical, orienté du bas vers le haut, de la partie inférieure vers la partie supérieure du véhicule 1.

Le véhicule automobile 1 comprend un module batterie 3. Le module batterie 3 comporte notamment une batterie d'alimentation de puissance, destinée à alimenter en énergie électrique un moteur électrique, notamment de traction ou d'entraînement, du véhicule 1. Le module batterie 3 est entouré par un boîtier de fermeture ou carter.

Dans la suite de la description, on entend par « batterie » un module batterie comprenant un ensemble d'éléments dont une batterie d'alimentation de puissance.

La batterie 3 est par exemple disposée en avant du train arrière 5 du véhicule 1 selon la direction longitudinale x. La surface inférieure 9 de la batterie 3 est destinée à être disposée sensiblement horizontalement, perpendiculairement à l'axe vertical z. La batterie 3 est disposée dans la partie inférieure ou soubassement du châssis du véhicule 1. La batterie 3 est mise en place sur le châssis du véhicule 1 par l'intermédiaire d'un support dit « support batterie ». Le support batterie comporte un élément de support avant 10 et un élément de support arrière 11 de chaque côté gauche et droit de la batterie 3. La batterie 3 est par exemple fixée, de façon amovible, au train arrière 5 par une fixation 7 située de chaque côté gauche et droit de la batterie 3.

Par « châssis » du véhicule, on entend une structure soutenant les éléments fonctionnels du véhicule. Par « caisse » du véhicule, on entend la carrosserie du véhicule. Dans le cas d'un véhicule automobile comportant un châssis-coque, le châssis est intégré à la carrosserie et les termes « caisse » et « châssis » sont donc équivalents. Par « sous caisse » ou « bas de caisse » du véhicule, on entend une portion de la carrosserie qui se situe dans les parties latérales basses du véhicule, au plus près du sol, entre les roues.

La surface inférieure 9 de la batterie 3 présente une longueur L selon la dimension longitudinale x et une largeur W selon la direction transversale y. La longueur L de la surface inférieure 9 de la batterie est par exemple comprise entre 300 mm et 2 cm. La largeur W de la surface inférieure 9 de la batterie est par exemple comprise entre 500 mm et 1,5 cm.

L'invention propose un dispositif de protection contre des efforts extérieurs appliqués au véhicule, notamment en cas de choc latéral. Un tel dispositif de protection est notamment destiné à protéger une batterie d'alimentation de puissance d'un véhicule automobile du type de celui de la figure 1.

Par « choc latéral », on entend un choc avec le côté droit ou le côté gauche du véhicule 1, correspondant à un effort extérieur appliqué au véhicule au moins selon la direction transversale y. Un choc latéral est par exemple susceptible d'avoir lieu avec un objet extérieur au véhicule tel qu'un poteau ou un trottoir.

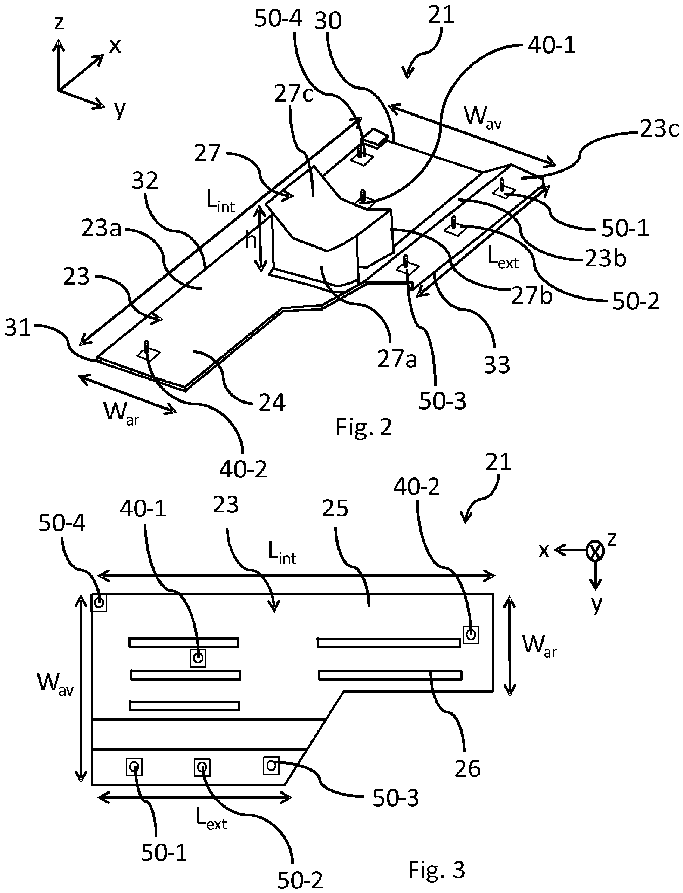

Un mode de réalisation d'un dispositif de protection 21 est décrit ci-après en référence aux figures 2 et 3, dans le cas d'un dispositif de protection 21 destiné à être disposé du côté droit du véhicule, pour protéger la batterie notamment dans le cas d'un choc latéral du côté droit du véhicule.

Bien entendu, l'invention propose également un dispositif de protection 21 destiné à être disposé du côté gauche du véhicule, pour protéger la batterie notamment dans le cas d'un choc latéral du côté gauche. Le dispositif de protection 21 destiné à être disposé du côté gauche du véhicule est symétrique au dispositif de protection 21 des figures 2 et 3, par rapport à un plan vertical (x, z) passant par l'extrémité interne 32 du dispositif de protection 21.

De préférence, un dispositif de protection 21 est disposé de chaque côté du véhicule. L'emplacement d'un dispositif de protection 21 de chaque côté du véhicule est représenté par des pointillés 14 du côté droit et par des pointillés 15 du côté gauche du véhicule sur la figure 1.

Le dispositif de protection 21 comporte, sous la forme d'une seule pièce, un élément de protection, ou protecteur, 23 et un absorbeur de choc 27.

L'élément de protection 23 peut se présenter sous la forme d'une feuille, ou plaque, par exemple métallique. L'élément de protection 23 est destiné à jouer le rôle de barrière physique ou de bouclier contre les chocs latéraux pour la batterie.

L'élément de protection 23 comprend une surface supérieure 24 et une surface inférieure 25 sensiblement parallèles entre elles. La surface supérieure 24 de l'élément de protection 23 est destinée à être disposée au moins partiellement en regard de la surface inférieure 9 de la batterie 3. La surface inférieure 25 de l'élément de protection 23 est destinée à faire face au sol. L'épaisseur de l'élément de protection 23 est notamment choisie de sorte à assurer une bonne rigidité en flexion de l'élément de protection 23. Par épaisseur de l'élément de protection 23, on entend la dimension de l'élément de protection 23 dans une direction sensiblement perpendiculaire aux surfaces supérieure 24 et inférieure 25.

La surface supérieure 24 et la surface inférieure 25 de l'élément de protection 23 sont destinées à être orientées sensiblement perpendiculairement à l'axe vertical z. On appelle longueur la dimension de l'élément de protection 23 selon la direction longitudinale x et largeur la dimension de l'élément de protection 23 selon la direction transversale y.

L'élément de protection 23 comprend par exemple un matériau métallique, notamment un alliage d'aluminium, ou un matériau plastique ou un matériau composite. L'épaisseur de l'élément de protection 23 est par exemple comprise entre 2 mm et 5 mm.

Avantageusement, l'élément de protection 23 se présente sous la forme d'une feuille, ou plaque, non plane, pliée. Du côté de la surface supérieure 24 de l'élément de protection 23, l'élément de protection 23 peut se présenter sous la forme d'une feuille, ou plaque convexe.

Avantageusement, l'élément de protection 23 peut comprendre des portions 23a, 23b, 23c de différents niveaux selon l'axe z, disposées le long sa largeur, comme cela sera décrit plus en détail ci-après.

La surface supérieure 24 de l'élément de protection 23 est destinée à être disposée au moins partiellement en regard de la surface inférieure 9 de la batterie 3 et également au moins partiellement en regard de la sous caisse 60 du véhicule.

L'élément de protection 23 est destiné à recouvrir au moins le bord latéral de la surface inférieure 9 de la batterie, et à entourer le bord latéral de la batterie 3.

De préférence, la forme de la surface de l'élément de protection 23, notamment pliée, sera choisie de sorte à s'adapter aux différences de niveau ou de hauteur selon la direction verticale z entre la surface inférieure 9 de la batterie 3 et les différentes parties de la sous caisse 60 du véhicule sur laquelle l'élément de protection 23 est destiné à être fixé.

Grâce à sa forme pliée, l'élément de protection 23 recouvre non seulement le bord latéral de la surface inférieure 9 de la batterie, mais entoure également le bord latéral de la batterie 3 sur au moins une partie de sa hauteur. Après assemblage sur la batterie 3 et la caisse 60 du véhicule, l'élément de protection 23 joue ainsi le rôle de barrière physique contre les chocs latéraux pour la batterie.

Avantageusement, l'élément de protection 23 présente une forme rectangulaire tronquée. Il en résulte que l'élément de protection 23 peut être mis en place dans le véhicule sans recouvrir la fixation 7 entre la batterie 3 et le train arrière 5 du véhicule, ni le train arrière 5 du véhicule.

Avantageusement, la surface inférieure 25 de l'élément de protection 23 comporte des rainures 26. Ces rainures permettent d'optimiser la rigidité de l'élément de protection 23 et le comportement acoustique et vibratoire (NVH, acronyme d'origine anglo-saxonne pour « Noise, Vibration and Harshness ») du véhicule.

Par exemple, les rainures 26 peuvent s'étendre dans la direction de l'élément de protection 23 destinée à être orientée selon la direction longitudinale x, sur tout ou partie de la longueur de l'élément de protection 23. Plusieurs rainures 26 parallèles entre elles et orientées selon la direction longitudinale x peuvent être réparties sur la surface inférieure 25 de l'élément de protection 23, le long de la direction transversale y. Dans le cas où les rainures 26 s'étendent seulement sur une partie de la longueur de l'élément de protection 23, plusieurs rainures 26 peuvent être disposées côte à côté le long de la direction longitudinale x, à distance les unes des autres.

Un absorbeur de choc 27 s'étend à partir de la surface supérieure 24 de l'élément de protection 23. L'absorbeur de choc 27 est destiné à absorber tout ou partie de l'énergie résultant d'un choc, notamment grâce à sa déformation. Avantageusement, l'absorbeur de choc 27 est en un matériau déformable, par exemple en un matériau métallique ou en un matériau plastique ou en un matériau composite. L'absorbeur de choc 27 est par exemple de type crash-box. L'élément de protection 23 joue notamment le rôle de support physique pour l'absorbeur de choc 27, en plus de son rôle de barrière physique contre les chocs.

Des simulations ont montré que le dispositif de protection 21, comportant un élément de protection 23 combiné avec un absorbeur de choc 27, permet d'absorber l'énergie résultant d'un choc latéral. La déformation, voire la rupture, du dispositif de protection 21 permet de garantir une intégrité optimale de la batterie 3 en cas de choc.

L'absorbeur de choc 27 comprend par exemple un matériau métallique, notamment un alliage d'aluminium, ou un matériau plastique ou un matériau composite.

L'élément de protection 23 et l'absorbeur de choc 27 peuvent par exemple être en un même matériau. Selon une variante, l'élément de protection 23 et l'absorbeur de choc 27 peuvent être en des matériaux différents.

Par exemple, l'élément de protection 23 et l'absorbeur de choc 27 sont co-intégrés sous la forme d'une seule pièce. Le dispositif de protection 21 se présente donc sous la forme d'une seule pièce. Il en résulte une réduction du coût du dispositif de protection et de son montage dans un véhicule automobile. Il en résulte également un montage simple à mettre en oeuvre. La co-intégration de l'absorbeur de choc 27 et de l'élément de protection 23 peut être réalisée par soudage dans le cas où l'absorbeur de choc 27 et l'élément de protection 23 sont en matériau métallique ou plastique.

L'absorbeur de choc 27 comprend par exemple une première portion latérale 27a, une deuxième portion latérale 27b et une portion supérieure 27c. Les première et deuxième portions latérales 27a, 27b s'étendent à partir de la surface supérieure 24 de l'élément de protection 23, sensiblement perpendiculairement à ladite surface 24. La portion supérieure 27c est en contact avec les extrémités des première et deuxième portions latérales 27a, 27b opposées à celles en contact avec la surface supérieure 24 de l'élément de protection 23. La portion supérieure 27c s'étend sensiblement perpendiculairement aux première et deuxième portions latérales 27a, 27b.

Avantageusement, la portion supérieure 27c de l'absorbeur de choc 27 n'est pas plane. La portion supérieure 27c de l'absorbeur de choc 27 peut présenter une forme concave, du côté opposé à celui faisant face à la surface supérieure 24 de l'élément de protection 23. Ceci permet d'optimiser l'absorption de l'énergie résultant d'un choc.

L'absorbeur de choc 27 est disposé sur la surface supérieure 24 de l'élément de protection 23 à un emplacement choisi de sorte que, après assemblage, l'absorbeur de choc 27 se trouve, selon la direction longitudinale x, entre la batterie 3 et le train arrière 5, notamment entre le support batterie 10 et la fixation 7 du train arrière 5, et selon la direction transversale y, contre le bord latéral de la batterie 3.

La hauteur h de l'absorbeur de choc 27 sera par exemple choisie de sorte à être sensiblement égale à l'épaisseur de la batterie 3. Par « hauteur » h de l'absorbeur de choc 27, on entend la dimension maximale des portions 27a, 27b selon la direction perpendiculaire à la surface supérieure 24 de l'élément de protection 23.

Selon un exemple de réalisation, l'élément de protection 23 comprend au moins un premier point de fixation 40-1, 40-2 destiné à la fixation du dispositif de protection 21 sur une batterie 3, et au moins un deuxième point de fixation 50-1, 50-2, 50-3, 50-4 destiné à la fixation du dispositif de protection 21 sur une caisse 60 d'un véhicule automobile.

L'élément de protection 23 comprend par exemple deux premiers points de fixation 40-1, 40-2 destinés à la fixation du dispositif de protection 21 sur une batterie 3, et quatre deuxièmes points de fixation 50-1, 50-2, 50-3, 50-4 destinés à la fixation du dispositif de protection 21 sur une caisse 60 d'un véhicule automobile.

En variante, l'élément de protection 23 pourra comprendre un nombre différent de premiers points de fixation et de deuxièmes points de fixation.

En variante, d'autres moyens de fixation de l'élément de protection 23 sur la batterie 3 et/ou la caisse 60 peuvent être envisagés, tels que le collage ou le soudage.

L'élément de protection 23 pourra également présenter d'autres formes. Par exemple, la forme de l'élément de protection 23 peut être rectangulaire ou carrée.

La forme de l'élément de protection 23 sera choisie de sorte à recouvrir au moins une partie de la surface inférieure 9 de la batterie 3 après agencement avec la batterie, dans la direction longitudinale x et dans la direction transversale y.

Un avantage d'un dispositif de protection 21 du type de celui décrit ci-dessus réside dans le fait qu'il permet de protéger une batterie d'un véhicule automobile contre des chocs latéraux.

Un autre avantage d'un dispositif de protection 21 du type de celui décrit ci-dessus réside dans le fait qu'il permet d'obtenir des performances aérodynamiques sous caisse accrues.

Un autre avantage d'un dispositif de protection 21 du type de celui décrit ci-dessus réside dans un coût de fabrication et de montage du dispositif de protection réduits, le dispositif de protection 21 comportant un élément de protection 23 et un absorbeur de choc 27 sous la forme d'une seule pièce. Il en résulte également un montage plus simple à mettre en oeuvre d'un tel dispositif de protection.

Un exemple de réalisation de l'élément de protection 23 est décrit plus en détails ci-après dans le cas d'un élément de protection 23 adapté à être fixé à la partie latérale droite de la sous caisse du véhicule.

L'élément de protection 23 comprend par exemple une première portion 23a, une deuxième portion 23b et une troisième portion 23c.

La première portion 23a de l'élément de protection 23 est adaptée à être disposée sensiblement horizontalement, et s'étend selon un premier niveau z0 selon l'axe vertical z. La première portion 23a de l'élément de protection 23, dite portion interne, est destinée à être disposée au moins partiellement en regard de, ou au moins partiellement en contact avec, la surface inférieure 9 de la batterie 3. Après assemblage du dispositif de protection 21 avec la batterie 3, la première portion 23a est la portion de l'élément de protection 23 la plus proche du centre du véhicule selon la direction transversale y, autrement dit la portion de l'élément de protection 23 la plus interne à la structure du véhicule. La portion 23a de l'élément de protection 23 est destinée à être la portion la plus basse de l'élément de protection 23 après assemblage.

La deuxième portion 23b de l'élément de protection 23 est inclinée par rapport à la première portion 23a, et s'étend du premier niveau z0 à un deuxième niveau z1, supérieur au niveau z0. La deuxième portion 23b, dite portion intermédiaire de l'élément de protection 23, est disposée entre la première portion 23a et la troisième portion 23c.

La troisième portion 23c de l'élément de protection 23 est sensiblement horizontale, et s'étend selon le deuxième niveau z1. La troisième portion 23c de l'élément de protection 23, dite portion externe, est destinée à être disposée au moins partiellement en regard de, ou au moins partiellement en contact avec, la sous caisse 60 du véhicule. Après assemblage du dispositif de protection 21 avec la batterie 3 et fixation sur la sous caisse 60 du véhicule, la troisième portion 23c est la portion de l'élément de protection 23 la plus externe à la structure du véhicule, autrement dit la plus proche du bord latéral droit du véhicule. La portion 23c de l'élément de protection 23 est destinée à être la portion la plus haute de l'élément de protection 23 après assemblage.

Avantageusement, l'élément de protection 23 présente une largeur variable selon la direction destinée à être orientée selon la direction longitudinale x du véhicule. L'extrémité 30 de l'élément de protection 23, dite extrémité avant, destinée à être disposée la plus en avant du véhicule, peut présenter une largeur Wₐᵥ supérieure à la largeur Wₐᵣ de l'extrémité 31 de l'élément de protection 23, dite extrémité arrière, destinée à être disposée la plus en arrière du véhicule. Par exemple, la largeur Wₐᵥ de l'extrémité avant 30 de l'élément de protection 23 est de l'ordre de deux fois la largeur Wₐᵣ de l'extrémité arrière 31 de l'élément de protection 23.

A titre d'exemple de dimensions, la largeur Wₐᵥ est par exemple comprise entre 200 mm et 400 mm, et la largeur Wₐᵣ est par exemple comprise entre 100 mm et 200 mm.

Avantageusement, l'élément de protection 23 présente une longueur variable selon selon la direction destinée à être orientée selon la direction tranversale y. L'extrémité 32 de l'élément de protection 23, dite extrémité interne, destinée à être disposée la plus proche du centre du véhicule, peut présenter une longueur Lᵢₙₜ supérieure à la longueur Lₑₓₜ de l'extrémité 33 de l'élément de protection 23, dite extrémité externe, destinée à être disposée la plus proche du bord latéral droit du véhicule. Par exemple, la longueur Lᵢₙₜ de l'extrémité interne 32 de l'élément de protection 23 est de l'ordre de deux fois la longueur Lₑₓₜ de l'extrémité externe 33 de l'élément de protection 23.

A titre d'exemple de dimensions, la longueur Lᵢₙₜ est par exemple comprise entre 700 mm et 900 mm, et la longueur Lₑₓₜ est par exemple comprise entre 300 mm et 500 mm.

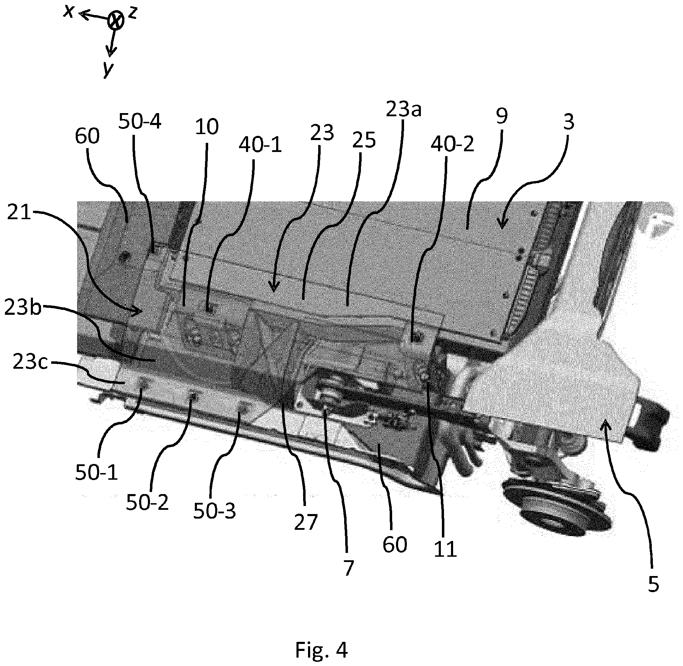

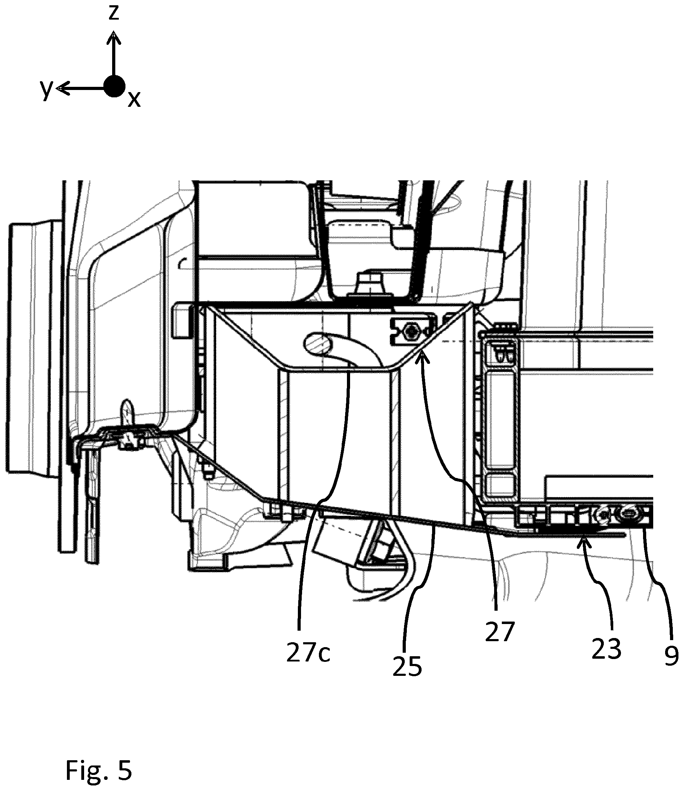

Un exemple d'agencement dans un véhicule automobile 1 d'une batterie d'alimentation de puissance 3 et d'un dispositif de protection 21 tel que celui décrit en relation avec les figures 2 et 3, comportant un élément de protection 23 et un absorbeur de choc 27 co-intégrés sous la forme d'une seule pièce, est décrit ci-après en relation avec les figures 4 et 5. Les figures 4 et 5 correspondent au cas d'un dispositif de protection 21 disposé du côté droit du véhicule, pour protéger la batterie notamment dans le cas d'un choc latéral du côté droit.

La surface supérieure 24 de l'élément de protection 23 du dispositif de protection 21 fait partiellement face à la surface inférieure 9 de la batterie 3. La surface inférieure 25 de l'élément de protection 23 du dispositif de protection 21 fait face au sol. La portion interne 23a de l'élément de protection 23 est disposée au moins partiellement en regard de, ou en contact avec, la surface inférieure 9 de la batterie 3. La portion externe 23c de l'élément de protection 23 est disposée au moins partiellement en regard de, ou en contact avec, la sous caisse 60 du véhicule. La portion interne 23a de l'élément de protection 23 peut également être disposée au moins partiellement en regard de, ou en contact avec, une partie de la sous caisse 60 disposée en avant de la batterie 3. Selon la direction longitudinale x du véhicule, l'absorbeur de choc 27 du dispositif de protection 21 est par exemple disposé entre l'élément de support avant 10 du support batterie et la fixation droite 7 du train arrière 5, et, selon la direction transversale y, l'absorbeur de choc 27 est par exemple disposé contre le bord latéral droit de la batterie 3.

Dans le cas d'un véhicule automobile comportant un châssis-coque, le châssis est intégré à la carrosserie. La troisième portion 23c de l'élément de protection 23 est alors destinée à être disposée au moins partiellement en regard du, ou au moins partiellement en contact avec le, soubassement du châssis-coque ou châssis du véhicule.

L'agencement peut comporter des éléments de fixation assurant une fixation amovible du dispositif de protection 21 sur la batterie 3 et sur la caisse 60. Ces éléments de fixation sont configurés pour exercer un effort de rapprochement du dispositif de protection 21 vers la batterie 3 et vers la caisse 60. Ces éléments de fixation peuvent être de toute nature, par exemple des vis de serrage.

La portion interne 23a de l'élément de protection 23 du dispositif de protection 21 est fixée à la batterie 3 par des éléments de fixation disposés à l'emplacement des premiers points de fixation 40-1, 40-2. Par exemple, le dispositif de protection 21 est fixé à l'élément de support avant 10 du support batterie à l'emplacement du premier point de fixation 40-1, et fixé à l'élément de support arrière 11 du support batterie à l'emplacement du premier point de fixation 40-2.

La portion externe 23c de l'élément de protection 23 du dispositif de protection 21 est fixée à la caisse 60 par des éléments de fixation disposés à l'emplacement des deuxièmes points de fixation 50-1, 50-2, 50-3. Par exemple, le dispositif de protection 21 est fixé à une partie latérale droite de la sous caisse 60 aux emplacements de trois deuxièmes points de fixation 50-1, 50-2, 50-3.

Avantageusement, la portion interne 23a de l'élément de protection 23 du dispositif de protection 21 est également fixée à la caisse 60 par un élément de fixation disposé à l'emplacement du deuxième point de fixation 50-4. Par exemple, le dispositif de protection 21 est fixé à une partie de la sous caisse 60 disposée en avant de la batterie 3 à l'emplacement du deuxième point de fixation 50-4. Il en résulte une fixation améliorée du dispositif de protection 21 sur la caisse 60 du véhicule.

Grâce à son positionnement d'une part sur le bord latéral de la surface inférieure 9 de la batterie 3 à la hauteur z0 et d'autre part sur la sous caisse 60 à la hauteur z1, l'élément de protection 23 du dispositif de protection 21 entoure la partie inférieure du bord latéral de la batterie. L'élément de protection 23 assure ainsi la fonction de barrière physique ou de bouclier contre les chocs latéraux.

L'élément de protection 23 recouvre au moins en partie la surface inférieure 9 de la batterie 3. Le dispositif de protection 21 est disposé à une distance plus proche du sol que la batterie 3, au niveau de la portion interne 23a de l'élément de protection 23. L'élément de protection 23 est ainsi l'élément le plus bas du véhicule, et non pas la batterie 3. L'élément de protection 23 assure ainsi la fonction de barrière physique ou de bouclier contre les chocs latéraux.

Un mode d'exécution d'un procédé de montage d'un dispositif de protection 21, comportant un élément de protection 23 et un absorbeur de choc 27 co-intégrés sous la forme d'une seule pièce, et d'une batterie d'alimentation de puissance 3 dans un véhicule 1 est décrit ci-après.

La batterie est montée de manière amovible dans le véhicule 1, par exemple dans la partie centrale du véhicule 1, notamment en avant du train arrière 5, par le dessous.

Le montage du dispositif de protection 21 et de la batterie 3 dans le véhicule 1 comprend les étapes suivantes :
- fournir une batterie 3 et au moins un dispositif de protection 21 destiné à protéger la batterie 3 contre des chocs latéraux, l'au moins un dispositif de protection 21 comportant un élément de protection 23 et un absorbeur de choc 27 co-intégrés sous la forme d'une seule pièce ;
- du côté droit du véhicule, fixer, de façon amovible, un premier dispositif de protection 21 sur le bord latéral droit de la batterie 3 et sur la caisse 60, de sorte que l'élément de protection 23 recouvre au moins en partie la surface inférieure 9 de la batterie, l'absorbeur de choc 27 étant par exemple disposé entre l'élément de support avant droit 10 du support batterie et la fixation droite 7 du train arrière 5 selon la direction longitudinale x du véhicule, et l'absorbeur de choc 27 étant par exemple disposé contre le bord latéral droit de la batterie 3 selon la direction transversale y ;
- et/ou du côté gauche du véhicule, fixer, de façon amovible, un deuxième dispositif de protection 21 sur le bord latéral gauche de la batterie 3 et sur la caisse 60, de sorte que l'élément de protection 23 recouvre au moins en partie la surface inférieure 9 de la batterie, l'absorbeur de choc 27 étant par exemple disposé entre l'élément de support avant gauche 10 du support batterie et la fixation gauche 7 du train arrière 5 selon la direction longitudinale x du véhicule, et l'absorbeur de choc 27 étant par exemple disposé contre le bord latéral gauche de la batterie 3 selon la direction transversale y.

L'élément de protection 23 du dispositif de protection 21 peut être fixé à la batterie 3 par au moins un élément de fixation inséré à l'emplacement de l'au moins un premier point de fixation 40-1, 40-2. L'élément de protection 23 est par exemple fixé aux éléments de support avant 10 et arrière 11 du support batterie, respectivement à l'emplacement des premiers points de fixation 40-1 et 40-2.

L'élément de protection 23 du dispositif de protection 21 peut être fixé à la sous caisse 60 par au moins un élément de fixation inséré à l'emplacement de l'au moins un deuxième points de fixation 50-1, 50-2, 50-3, 50-4. L'élément de protection 23 est par exemple fixé à une partie latérale du sous caisse 60 aux emplacements des trois deuxièmes points de fixation 50-1, 50-2, 50-3, et à une partie du sous caisse 60 disposée en avant de la batterie 3 à l'emplacement du deuxième point de fixation 50-4.

Un avantage d'un procédé de montage d'un dispositif de protection 21 du type de celui décrit ci-dessus est lié au fait que le dispositif de protection 21 comporte un élément de protection 23 et un absorbeur de choc 27 sous la forme d'une seule pièce. Il en résulte un procédé de montage plus simple à mettre en oeuvre et présentant un coût réduit.

Un dispositif de protection 21 a été décrit ci-dessus dans le cas d'une batterie destinée à alimenter un moteur électrique de traction d'un véhicule. Un tel dispositif de protection 21 pourra également être utilisé dans le cas d'une batterie destinée à alimenter d'autres types de moteurs électriques.

Il a été décrit ci-dessus un dispositif de protection 21 notamment destiné à une batterie 3 d'alimentation de puissance d'un véhicule automobile.

Un avantage d'un tel dispositif de protection 21 réside dans le fait qu'il peut être utilisé pour protéger d'autres éléments fonctionnels et/ou structurels d'un véhicule automobile contre des chocs latéraux, par exemple un circuit électrique, notamment de freinage, ou un circuit de carburant dans le cas de véhicules à motorisation hybride ou un circuit électrique basse et/ou haute tension ou un circuit de refroidissement d'une batterie.

Il a été décrit un dispositif de protection 21 destiné à protéger une batterie contre des chocs latéraux, pouvant être disposé à droite et/ou à gauche d'un véhicule.

Au lieu de deux dispositifs de protection 21 disposés de part et d'autre d'un véhicule, un seul dispositif de protection 21 pourrait être prévu, comportant par exemple un élément de protection 23 destiné à recouvrir non seulement les parties latérales droite et gauche de la surface inférieure 9 de la batterie 3, mais également la portion centrale de la surface inférieure 9 de la batterie 3. Un tel dispositif de protection 21 peut être destiné à recouvrir la surface inférieure 9 de la batterie 3 sur tout ou partie de sa largeur W. Un tel élément de protection 23 sera par exemple tronqué des deux côtés doit et gauche, de sorte à ne pas recouvrir le train arrière droit du véhicule ni le train arrière gauche. Un tel dispositif de protection 21 comporte, sous la forme d'une seule pièce, un élément de protection 23 et un premier et un deuxième absorbeurs de choc 27, disposés respectivement du côté droit et du côté gauche.

## Revendications

1. Dispositif de protection (21), configuré pour protéger contre des chocs latéraux une batterie d'alimentation de puissance (3) d'un véhicule automobile (1) à motorisation électrique ou hybride, comportant, sous la forme d'une seule pièce (21), un élément de protection (23) et un absorbeur de choc (27) de type crash-box, l'élément de protection (23) se présentant sous la forme d'une feuille, ou plaque, plane ou non plane, notamment convexe du côté de la surface supérieure (24) de l'élément de protection, de forme rectangulaire tronquée.

2. Dispositif de protection selon la revendication 1, dans lequel la surface inférieure (25) de l'élément de protection (23), destinée à faire face au sol, comporte des rainures (26).

3. Dispositif de protection selon l'une quelconque des revendications 1 à 2, dans lequel la portion supérieure (27c) de l'absorbeur de choc (27) est concave du côté opposé à celui faisant face à la surface supérieure (24) de l'élément de protection (23).

4. Dispositif de protection selon l'une quelconque des revendications 1 à 3, dans lequel l'absorbeur de choc (27) comprend un matériau déformable, par exemple choisi dans le groupe comprenant un matériau métallique, notamment un alliage d'aluminium, un matériau plastique et un matériau composite.

5. Dispositif de protection selon l'une quelconque des revendications 1 à 4, dans lequel l'élément de protection (23) comprend un matériau choisi dans le groupe comprenant un matériau métallique, notamment un alliage d'aluminium, un matériau plastique et un matériau composite.

6. Dispositif de protection selon l'une quelconque des revendications 1 à 5, dans lequel l'élément de protection (23) et l'absorbeur de choc (27) sont en un même matériau.

7. Dispositif de protection selon l'une quelconque des revendications 1 à 6, dans lequel l'élément de protection (23) présente une épaisseur comprise entre 2 mm et 5 mm.

8. Dispositif de protection selon l'une quelconque des revendications 1 à 7, dans lequel l'élément de protection (23) comporte, selon un axe sensiblement vertical (z), une portion interne (23a) d'un premier niveau, une portion intermédiaire inclinée du premier niveau à un deuxième niveau (23b) et une portion externe (23c) du deuxième niveau, ladite portion interne (23a) étant destinée à faire face au moins en partie à une surface inférieure (9) de la batterie (3), et ladite portion externe (23c) étant destinée à faire face au moins en partie à la caisse (60) d'un véhicule (1).

9. Dispositif de protection selon l'une quelconque des revendications 1 à 8, dans lequel l'élément de protection (23) comporte au moins un premier point de fixation (40-1, 40-2), par exemple deux premiers points de fixation, destinés à la fixation du dispositif de protection (21) sur une batterie (3), et au moins un deuxième point de fixation (50-1, 50-2, 50-3, 50-4), par exemple quatre deuxièmes points de fixation, destinés à la fixation du dispositif de protection (21) sur une caisse (60) d'un véhicule automobile.

10. Véhicule automobile à motorisation électrique ou hybride, comprenant une batterie d'alimentation de puissance (3) et un dispositif de protection (21) selon l'une quelconque des revendications 1 à 9, dans lequel l'élément de protection (23) recouvre au moins en partie la surface inférieure (9) de la batterie (3), de sorte que le dispositif de protection (21) soit plus proche du sol que la surface inférieure de la batterie.

11. Véhicule selon la revendication précédente, dans lequel l'élément de protection (23) est fixé, de façon amovible, à un support (10, 11) de la batterie (3) et à la caisse (60) du véhicule.

12. Véhicule selon la revendication 1, dans lequel l'absorbeur de choc (27) du dispositif de protection est disposé, selon la direction longitudinale (x) du véhicule, entre un élément de support avant (10) du support batterie et une fixation (7) du train arrière (5) du véhicule, et, selon la direction transversale (y) du véhicule, contre un bord latéral de la batterie (3).

13. Procédé de montage d'un dispositif de protection (21) selon l'une quelconque des revendications 1 à 9 dans un véhicule automobile à motorisation électrique ou hybride comprenant une batterie d'alimentation de puissance (3), comprenant les étapes suivantes :
- fournir une batterie (3) et au moins un dispositif de protection (21) ; et
- au moins d'un des deux côtés droit et gauche du véhicule, fixer, de façon amovible, un premier dispositif de protection (21) sur le bord latéral correspondant de la batterie (3) et sur la caisse (60) du véhicule, de sorte que l'élément de protection (23) recouvre au moins en partie la surface inférieure (9) de la batterie, l'absorbeur de choc (27) étant par exemple disposé, selon la direction longitudinale (x) du véhicule, entre un élément de support avant (10) d'un support de la batterie et une fixation (7) du train arrière (5), et, selon la direction transversale (y) du véhicule, contre le bord latéral de la batterie (3).

## Patentansprüche

1. Schutzvorrichtung (21), die dazu ausgelegt ist, eine Leistungsversorgungsbatterie (3) eines Kraftfahrzeugs (1) mit Elektro- oder Hybridantrieb vor seitlichen Stößen zu schützen, umfassend, in Form eines einzigen Teils (21), ein Schutzelement (23) und einen Stoßdämpfer (27) des Typs Crash-Box, wobei das Schutzelement (23) die Form einer ebenen oder nicht ebenen, insbesondere auf der Seite der oberen Fläche (24) des Schutzelements konvexen Folie oder Platte von abgestumpfter rechteckiger Form aufweist.

2. Schutzvorrichtung nach Anspruch 1, wobei die untere Fläche (25) des Schutzelements (23), die dazu bestimmt ist, dem Boden zugewandt zu sein, Rillen (26) aufweist.

3. Schutzvorrichtung nach einem der Ansprüche 1 bis 2, wobei der obere Abschnitt (27c) des Stoßdämpfers (27) auf der Seite, die derjenigen gegenüberliegt, die der oberen Fläche (24) des Schutzelements (23) zugewandt ist, konkav ist.

4. Schutzvorrichtung nach einem der Ansprüche 1 bis 3, wobei der Stoßdämpfer (27) ein verformbares Material umfasst, das beispielsweise aus der Gruppe ausgewählt ist, die ein Metallmaterial, insbesondere eine Aluminiumlegierung, ein Kunststoffmaterial und ein Verbundmaterial umfasst.

5. Schutzvorrichtung nach einem der Ansprüche 1 bis 4, wobei das Schutzelement (23) ein Material umfasst, das aus der Gruppe ausgewählt ist, die ein Metallmaterial, insbesondere eine Aluminiumlegierung, ein Kunststoffmaterial und ein Verbundmaterial umfasst.

6. Schutzvorrichtung nach einem der Ansprüche 1 bis 5, wobei das Schutzelement (23) und der Stoßdämpfer (27) aus demselben Material sind.

7. Schutzvorrichtung nach einem der Ansprüche 1 bis 6, wobei das Schutzelement (23) eine Dicke zwischen 2 mm und 5 mm aufweist.

8. Schutzvorrichtung nach einem der Ansprüche 1 bis 7, wobei das Schutzelement (23) entlang einer im Wesentlichen vertikalen Achse (z) einen inneren Abschnitt (23a) einer ersten Ebene, einen geneigten Zwischenabschnitt von der ersten Ebene zu einer zweiten Ebene (23b) und einen äußeren Abschnitt (23c) der zweiten Ebene aufweist, wobei der innere Abschnitt (23a) dazu bestimmt ist, einer unteren Fläche (9) der Batterie (3) zumindest teilweise gegenüberzuliegen, und wobei der äußere Abschnitt (23c) dazu bestimmt ist, der Karosserie (60) eines Fahrzeugs (1) zumindest teilweise gegenüberzuliegen.

9. Schutzvorrichtung nach einem der Ansprüche 1 bis 8, wobei das Schutzelement (23) mindestens einen ersten Befestigungspunkt (40-1, 40-2), beispielsweise zwei erste Befestigungspunkte, die zur Befestigung der Schutzvorrichtung (21) an einer Batterie (3) bestimmt sind, und mindestens einen zweiten Befestigungspunkt (50-1, 50-2, 50-3, 50-4), beispielsweise vier zweite Befestigungspunkte, die zur Befestigung der Schutzvorrichtung (21) an einer Karosserie (60) eines Kraftfahrzeugs bestimmt sind, aufweist.

10. Kraftfahrzeug mit Elektro- oder Hybridantrieb, umfassend eine Leistungsversorgungsbatterie (3) und eine Schutzvorrichtung (21) nach einem der Ansprüche 1 bis 9, wobei das Schutzelement (23) die untere Fläche (9) der Batterie (3) zumindest teilweise bedeckt, sodass die Schutzvorrichtung (21) dem Boden näher ist als die untere Fläche der Batterie.

11. Fahrzeug nach dem vorangehenden Anspruch, wobei das Schutzelement (23) lösbar an einer Halterung (10, 11) der Batterie (3) und an der Karosserie (60) des Fahrzeugs befestigt ist.

12. Fahrzeug nach Anspruch 1, wobei der Stoßdämpfer (27) der Schutzvorrichtung in der Längsrichtung (x) des Fahrzeugs zwischen einem vorderen Halterungselement (10) der Batteriehalterung und einer Befestigung (7) der Hinterachse (5) des Fahrzeugs und in der Querrichtung (y) des Fahrzeugs an einer Seitenkante der Batterie (3) angeordnet ist.

13. Verfahren zur Montage einer Schutzvorrichtung (21) nach einem der Ansprüche 1 bis 9 in einem Kraftfahrzeug mit Elektro- oder Hybridantrieb, das eine Leistungsversorgungsbatterie (3) umfasst, umfassend die folgenden Schritte:
- Bereitstellen einer Batterie (3) und mindestens einer Schutzvorrichtung (21) und
- zumindest auf einer der beiden Fahrzeugseiten, der rechten und der linken, lösbares Befestigen einer ersten Schutzvorrichtung (21) an der entsprechenden Seitenkante der Batterie (3) und an der Karosserie (60) des Fahrzeugs, sodass das Schutzelement (23) die untere Fläche (9) der Batterie zumindest teilweise bedeckt, wobei der Stoßdämpfer (27) in der Längsrichtung (x) des Fahrzeugs beispielsweise zwischen einem vorderen Halterungselement (10) einer Batteriehalterung und einer Befestigung (7) der Hinterachse (5) und in der Querrichtung (y) des Fahrzeugs an der Seitenkante der Batterie (3) angeordnet ist.

## Claims

1. Protection device (21), configured to protect a power supply battery (3) of a motor vehicle (1) with electric or hybrid drive against lateral shocks, comprising, in the form of a single piece (21), a protection element (23) and a shock absorber (27) of crash-box type, the protection element (23) taking the form of a sheet, or plate, planar or nonplanar, notably convex on the side of the top surface (24) of the protection element, of truncated rectangular form.

2. Protection device according to Claim 1, wherein the bottom surface (25) of the protection element (23) intended to face the ground comprises grooves (26).

3. Protection device according to either one of Claims 1 and 2, wherein the top portion (27c) of the shock absorber (27) is concave on the side opposite that facing the top surface (24) of the protection element (23).

4. Protection device according to any one of Claims 1 to 3, wherein the shock absorber (27) comprises a deformable material, for example chosen from the group comprising a metallic material, notably an alloy of aluminium, a plastic material and a composite material.

5. Protection device according to any one of Claims 1 to 4, wherein the protection element (23) comprises a material chosen from the group comprising a metallic material, notably an alloy of aluminium, a plastic material and a composite material.

6. Protection device according to any one of Claims 1 to 5, wherein the protection element (23) and the shock absorber (27) are made of a same material.

7. Protection device according to any one of Claims 1 to 6, wherein the protection element (23) has a thickness of between 2 mm and 5 mm.

8. Protection device according to any one of Claims 1 to 7, wherein the protection element (23) comprises, on a substantially vertical axis (z), an inner portion (23a) of a first level, an intermediate portion that is inclined from the first level to a second level (23b) and an outer portion (23c) of the second level, said inner portion (23a) being intended to at least partly be opposite a bottom surface (9) of the battery (3), and said outer portion (23c) being intended to be at least partly opposite the shell (60) of a vehicle (1).

9. Protection device according to any one of Claims 1 to 8, wherein the protection element (23) comprises at least one first fixing point (40-1, 40-2), for example two first fixing points, intended for the fixing of the protection device (21) to a battery (3), and at least one second fixing point (50-1, 50-2, 50-3, 50-4), for example four second fixing points, intended for the fixing of the protection device (21) to a shell (60) of a motor vehicle.

10. Motor vehicle with electric or hybrid drive, comprising a power supply battery (3) and a protection device (21) according to any one of Claims 1 to 9, wherein the protection element (23) at least partly covers the bottom surface (9) of the battery (3), such that the protection device (21) is closer to the ground than the bottom surface of the battery.

11. Vehicle according to the preceding claim, wherein the protection element (23) is fixed, removably, to a support (10, 11) of the battery (3) and to the shell (60) of the vehicle.

12. Vehicle according to Claim 1, wherein the shock absorber (27) of the protection device is disposed, in the longitudinal direction (x) of the vehicle, between a front support element (10) of the battery support and a fixing (7) of the rear end (5) of the vehicle, and, in the transverse direction (y) of the vehicle, against a lateral edge of the battery (3).

13. Method for mounting a protection device (21) according to any one of Claims 1 to 9 in a motor vehicle with electric or hybrid drive comprising a power supply battery (3), comprising the following steps:
- supplying a battery (3) and at least one protection device (21); and
- on at least one of the two left and right sides of the vehicle, fixing, removably, a first protection device (21) to the corresponding lateral edge of the battery (3) and to the shell (60) of the vehicle, such that the protection element (23) at least partly covers the bottom surface (9) of the battery, the shock absorber (27) being for example disposed, in the longitudinal direction (x) of the vehicle, between a front support element (10) of a battery support and a fixing (7) of the rear end (5), and, in the transverse direction (y) of the vehicle, against the lateral edge of the battery (3) .
